# EUROPÄISCHE PATENTSCHRIFT

(11) **EP 0 743 783 B1**
(45) Veröffentlichungstag und Bekanntmachung des Hinweises auf die Patenterteilung: **29.10.2003**
(21) Anmeldenummer: 95120332.2
(22) Anmeldetag: 21.12.1995
(51) Int. Cl.: H04M 15/00

(54) **Verfahren und Vorrichtung zum Ermöglichen einer Nachprüfung der Gebührenabrechnung**
Method and device to make possible a verification of charge accounting
Méthode et appareil pour rendre possible une vérification de la taxation

(30) Priorität: 18.05.1995 DE 19517931
(43) Veröffentlichungstag der Anmeldung: 20.11.1996
(73) Patentinhaber: Deutsche Telekom AG, 53113 Bonn (DE)
(72) Erfinder: Scheerhorn, Alfred, Dr.-Ing., D-64293 Darmstadt (DE)

(56) Entgegenhaltungen:
- EP-A- 0 502 446
- US-A- 5 086 457
- US-A- 5 301 234

## Beschreibung

Die Erfindung betrifft ein Verfahren und eine Vorrichtung zum Ermöglichen einer Nachprüfung der Gebührenabrechnung der im Oberbegriff des Verfahrensanspruch 1 bzw. des Vorrichtungsanspruches 6 näher bezeichneten Art. Eine Vergleichslösung ist in der DE-PS 43 20 812 C 1 beschrieben. Dort sind auch weitere Vergleichslösungen und die allgemeine Problematik aufgeführt.

Netzbetreiber wollen verhindern, daß ihr Netz ohne angemessene Gebühr oder von Unbefugten benutzt wird. Erfolgt ein unbefugtes Aufschalten auf eine Anschlußleitung des Netzes, das der Netzbetreiber nicht bemerkt, dann werden dem legitimen Benutzer der Leitung die angefallenen Gebühren in Rechnung gestellt. Der Kunde muß für Kommunikationsverbindungen bezahlen, die nicht von seinem Endgerät aus geführt wurden. Um dies zu vermeiden, wurden bereits verschiedene Lösungen zum vergleichsweisen Ermitteln der Gebühr im Endgerät (z.B. Zählimpuls-Durchschaltung vom Netzbetreiber zum Kunden) und zur Sicherheit der Leitungen des Netzes gegen unbefugte Fremdzugriffe (z.B. Authentikation der Kundenberechtigung zum Netzzugriff) vorgeschlagen.

Eine Erfassung von Gebührendaten beim Kunden wird vom Netzbetreiber nur dann anerkannt, wenn beweiskräftige Gebührendaten am Teilnehmeranschluß TA des Kunden vorliegen. Dieses ist allgemein nicht der Fall. Auch bei Abweichungen der Anzeige der durchgeschalteten Zählimpulse beim Kunden gegenüber den vom Netzbetreiber berechneten Einheiten fehlt die Beweiskraft, weil nicht nachvollziehbar ist, welche weiteren Endgeräte vom Kunden evtl. noch betrieben wurden, wobei auch parallele Abzweigungen am amtsseitigen Teilnehmeranschuß (TA) nicht mit Sicherheit auszuschließen sind.

Bei der Vergleichslösung, DE-PS 43 20 812 C 1 wird ein Gerät zwischen die Leitungen zum Amt und zum Telefon bzw. anderen Endeinrichtungen eingeschaltet. Für das Erkennen des Belegens einer Leitung und der Wahlimpulse erfolgt eine Strommessung an einem in die Leitung eingeschleiften Widerstand. Alle anderen Signale sind aus Gleich- und Wechselspannungs-Überwachungen ableitbar.

Daten, die natürlicherweise am Teilnehmeranschuß TA des Kunden anfallen, sind alle eingespeisten Signale. Das sind die Wahlimpulse und Signale eines Endgerätes, durch die ein Benutzer Verbindungen aufbaut oder andere Serviceleistungen anfordert.

Diese Daten, sowie der Zeitpunkt und die Dauer der Verbindung zur Vermittlungsstelle, fallen direkt an der Teilnehmeranschlußeinheit TAE an und sind leicht aufzuzeichnen. Aus Datenschutzgründen können diese Daten mittels des Prozessors kodiert werden, damit das Auslesen nur den Berechtigten möglich ist.

Der entscheidende Nachteil einer Datenaufzeichnung beim Kunden ist, daß der Kunde die Datenaufzeichnung umgehen kann. Solange nicht absolut ausgeschlossen ist, daß der Kunde die Datenaufzeichnung - mit welchen Mitteln auch immer - umgeht, ohne daß der Netzbetreiber es bemerkt, kann der Netzbetreiber die beim Kunden aufgezeichneten Daten nicht als beweiskräftig anerkennen.

Eine physikalische Sicherung der Datenaufzeichnung beim Kunden würde eine physikalische Sicherung der gesamten Anschlußleitung voraussetzen. Eine derartige Sicherung ist nicht vorhanden und eine Realisierung unrealistisch.

In der EP-A-502 446 ist ein Authentifizierungsverfahren zum Einsatz im Mobilfunknetz beschrieben. Dabei handelt es sich um ein Challenge-Response-Verfahren basierend auf dem Einsatz von Chipkarten. Derartige Verfahren sind bekannte Werkzeuge im Bereich der Kryptographie, wobei der Einsatz dieser Authentikationsverfahren den Nachteil hat, daß keine strenge nachträgliche Nachweisbarkeit authentisierter Transaktionen wie Mobilfunkgespräche, getätigte Anrufe, Netzverbindungen, gegeben ist.

Es sind auch Vorschläge zu einer Authentikation der Kundenberechtigung zum Ketzzugriff bekannt. Eine vorgeschlagene Lösung des Problems besteht in einer jeder Verbindung vorausgehenden Authentikation der Kundenberechtigung von einer Einrichtung beim Kunden aus, die mit Hilfe eines geheimen Schlüssels mit einer ihr im Netz zugeordneten Gegenstelle kommuniziert. Diese Gegenstelle läßt die Durchschaltung der eigentlichen Kommunikationsverbindung erst nach erfolgreicher Authentikation zu und wird im folgenden als Leitungsüberwachungseinheit LÜE bezeichnet. Die LÜE ist am Ende der Anschlußleitung installiert. Dies kann entweder direkt vor einer Vermittlungsstelle VST sein oder vor einem Konzentrator zum Beispiel am Übergangspunkt zwischen Kupfer- und Glasfaserverbindung.

Ein Angreifer, der sich an das Telefonnetz des Kunden oder zwischen der dort montierten Einrichtung und der Leitungsuberwachungseinheit LÜE auf die Leitung aufschaltet, hat keine Möglichkeit, Signale bzw. Wahlimpulse vorzutäuschen, ohne daß diese in der LÜE als falsch erkannt werden. Diese Signale werden nicht weiter für einen Verbindungsaufbau berücksichtigt und der Betrugsversuch wird gegebenenfalls aufgezeichnet.

Hinter der Leitungsüberwachungseinheit LÜE ist die Verbindung weiterhin gesichert. Zwischen der LÜE und der ihr nachgeschalteten Einheit bleibt ein Angriffspunkt bestehen. Ein Angreifer kann sich direkt nach der LÜE auf die Anschlußleitung aufschalten.

Bei der Leitungsüberwachungseinheit LÜE, die nicht an einem ständig durch den Netzbetreiber kontrollierten Ort installiert ist, bleibt ein offener Angriffspunkt bestehen. Auch an einem durch den Netzbetreiber ständig kontrollierten Ort bestehen immer noch Angriffsmöglichkeiten für potentielle Innentäter.

Ziel der Erfindung ist es, zu vermeiden, daß legitime Benutzer für Verbindungen bezahlen müssen, die daraus resultierten, daß ihre Anschlußleitung unbefugt benutzt wurde, d.h. nicht von ihrer Teilnehmeranschlußeinheit TAE aus. Außerdem soll der Netzbetreiber unbefugte Benutzungen seines Netzes erkennen können.

Dieses Ziel wird durch das im Kennzeichen von Patentanspruch 1 beschriebene Verfahren erreicht.

Vorteilhafte Weiterbildungen des Verfahrens sind in den Unteransprüchen 2 bis 4 beschrieben.

Eine zur Durchführung eines solchen Verfahrens geeignete Vorrichtung ist im Kennzeichen des Patentanspruch 5 angeführt.

Die Erfindung mit ihrer Wirkungsweise und ihren Vorteilen wird nachstehend anhand von Ausführungbeispielen näher erläutert.

Die Aufzeichnung von Verbindungsdaten beim Kunden kann vom Netzbetreiber nicht als beweiskräftig akzeptiert werden, solange nicht absolut ausgeschlossen ist, daß der Kunde diese Datenaufzeichnung umgeht.

Durch das Verfahren, das zu einer Kombination der vorteilhaften Effekte der beiden aufgeführten Lösungen führt, kann jedoch eine sowohl für den Kunden als auch für den Netzbetreiber akzeptable Lösung realisiert werden.

Dazu wird die Aufzeichnung der Verbindungsdaten in einer intelligenten Teilnehmeranschlußeinheit iTAE untrennbar mit der Authentikation der Signale gegenüber der Leitungsüberwachungseinheit LÜE gekoppelt. Bei einem Verbindungsaufbau oder anderen Serviceleistungen werden die Signale des Endgerätes in der iTAE der LÜE gegenüber authentifiziert und in der iTAE aufgezeichnet, ggf. komprimiert und/oder verschlüsselt.

Die untrennbare Kopplung der beiden Prozesse, Authentikation und Datenspeicherung, kann durch verschiedene Maßnahmen gesichert werden.

Physikalisch kann die iTAE durch eine Verplombung oder Versiegelung geschützt werden. Auch kann die iTAE so vergossen werden, daß eine Abtrennung der Datenspeicherung von der Authentikation nicht ohne erkennbare Manipulationen möglich ist.

Eine elektronisch, mathematische Methode ist die Kopplung der Prozesse durch eine Kryptologik, durch die jegliche Manipulation oder Nichtspeicherung von Verbindungsdaten aufgedeckt würde.

Aufgezeichnet werden können in der iTAE die an ihr anfallenden Daten wie Wahlimpulse und Signale eines Endgerätes, durch die ein Benutzer Verbindungen aufbaut oder andere Serviceleistungen anfordert, sowie Zeitpunkt und Dauer der Verbindung zum Netz.

Falls die Dauer von tatsächlich in Anspruch genommenen gebührenpflichtigen Verbindungen in der iTAE ermittelbar ist, ist es vorteilhaft Daten hierüber abzuspeichern. Diese Daten liegen jedoch nicht unbedingt an der iTAE vor.

Prinzipiell können alle netzseitig zur iTAE gelangenden Signale -(wie z.B. Gebührenimpulse) von einem Angreifer auf der Anschlußleitung oder vom Netzbetreiber verändert werden. Sogar der Kunde könnte diese Signale vor dem Eintreffen in seiner iTAE manipulieren.

Grundsätzlich erscheint es deshalb ratsam, die iTAE so zu gestalten, daß sie nachweislich unabhängig von netzseitigen Signalen arbeitet. Aus diesem Grunde ist es prinzipiell in der iTAE nicht möglich mit Sicherheit zu bestimmen, ob eine angeforderte Netzverbindung tatsächlich aufgebaut wurde.

Eine Ausnahme ist eine Datenübertragung aus dem Netz in die iTAE, bei der die Daten so verschlüsselt sind, daß nur die iTAE und die sendende Stelle (die LÜE) die Verschlüsselung, d.h. den geheimen Schlüssel, kennen.

Dabei muß jedoch sichergestellt sein, daß kein potentieller Innentäter die Möglichkeit hat, derartige Nachrichten zu generieren oder zu manipulieren.

Beweiskräftig sind nur Daten, die die iTAE korrekt verschlüsselt empfängt. Wenn die iTAE Daten erwartet aber nicht empfängt, kann die Übertragung der Daten mißbräuchlich unterdrückt worden sein.

Die Datenspeicherung muß die schon oben genannten Anforderungen erfüllen:
- Verhinderung kundenseitiger Manipulationen der aufgezeichneten Daten.
- Verhinderung netzseitiger Manipulationen der aufgezeichneten Daten.

Die Authentikation erfolgt dadurch, daß in der iTAE, abhängig von den Signalen des Endgerätes und einem in der iTAE gespeicherten geheimen Schlüssel, Authentikationstoken berechnet werden. Diese werden zusätzlich zu den Signalen mit übertragen. Ohne Kenntnis des geheimen Schlüssels der iTAE muß es praktisch unmöglich sein, korrekte Authentikationstoken zu bestimmen.

Die Gebührenabrechnung erfolgt beim Netzbetreiber wie bisher.

Im Beschwerdefall sucht ein Servicetechniker des Netzbetreibers den Kunden auf und ermittelt (mit Hilfe eines Spezialgerätes) die in der iTAE des Kunden erfaßten Daten. Diese kann er dem Kunden vorort ausdrucken und zur Verfügung stellen.

Falls Manipulationen an der iTAE des Kunden bzw. an den in der iTAE gespeicherten Verbindungsdaten festzustellen sind, verlieren die in der iTAE gespeicherten Daten ihre Beweiskraft.

Die Lösung ist kundenorientiert, da im Beschwerdefall nur die in der iTAE anfallenden Daten bei der Kundenrechnung berücksichtigt werden.

In der iTAE könnten zusätzlich über eine Anzeige dem Kunden jeweils die aktuellen Verbindungsdaten angezeigt werden, so daß es dem Kunden persönlich möglich wäre, seine Verbindungsdaten zu protokollieren.

Wenn Differenzen zwischen dem Nachweis über die Verbindungen auf der Anschlußleitung, der vom Netzbetreiber aufgestellt wurde, und den in der iTAE erfaßten Daten auftreten, weiß der Netzbetreiber, daß dieser Netzanschluß unbefugt benutzt wurde, und kann entsprechende Maßnahmen einleiten.

Bietet der Netzbetreiber seinerseits dem Kunden eine Auflistung der Verbindungen auf seiner Anschlußleitung an, reicht es aus, in der iTAE nur soviel Verbindungsdaten zu speichern, daß eine Zuordnung dieser Daten zu denen in der Auflistung des Netzbetreibers möglich ist.

Wenn die iTAE mit einem Prozessor ausgestattet ist, um ihre Signale der LÜE gegenüber zu authentifizieren, dann erfordert die zusätzliche Speicherung dieser Verbindungsdaten nur einen geringen Mehraufwand.

Für die Authentikation kann jeder iTAE ein eindeutiger geheimer Schlüssel zugeordnet werden, der in der iTAE gesichert gespeichert ist (z.B. auf einer Chipkarte oder einem Plug-In).

Eine heute häufig verwendete Schlüssellänge ist 64 Bit für den Data Encryption Standard (DES). Als Authentikationstoken kann dann ein Message Authentikation Code (MAC, siehe ISO/IEC Dis 9798-2: IT-Security techniques - Entity authentication mechanisms) verwendet werden, der mit dem geheimen Schlüssel der iTAE gebildet wurde.

In diesem MAC können die Anschlußkennung, die einzelnen Endgerätesignale, und eine Sequenznummer, die nach jeder Berechnung eines Authentikationstokens erhöht wird, mit eingehen. Die iTAE sendet die Authentikationstoken zusätzlich zu den Endgerätesignalen.

Die LÜE kennt ihrerseits alle Informationen um den zu den empfangenen Endgerätesignalen die Authentikationstoken zu berechnen. Deshalb kann es die von der iTAE empfangenen Authentikationstoken überprüfen und entscheiden, ob die empfangenen Signals tatsächlich von der iTAE stammen.

Die Authentikation der Endgerätesignale erfordert in der iTAE Intelligenz zur Erkennung der Endgerätesignale bzw. Wahlinformationen, ein kryptologisches Authentikationsprotokoll und ein Kommunikationsprotokoll mit der LÜE. Dazu muß in der iTAE ein Prozessor und Speicherplatz (RAM und ROM) vorgesehen werden. Abhängig von der kryptographischen Lösung wird auch PROM bzw. EEPROM in der iTAE benötigt.

Eine zusätzliche Routine zur Aufzeichnung der Signale des Endgerätes in komprimierter Form und der hierzu notwendige Speicher würden die iTAE nur unwesentlich komplexer und damit kaum teurer machen.

Durch die Ausstattung der iTAE mit einer Echtzeituhr können der Verbindungszeitpunkt und die Verbindungsdauer exakt bestimmt werden.

Eine weniger aufwendigere jedoch hinreichende Lösung wäre, den Verbindungszeitpunkt und die Verbindungsdauer vom Prozessortakt abzuleiten.

Bei einem Verbindungsaufbau wird in der iTAE dazu ein vom Prozessortakt abgeleiteter Sekundenzähler gestartet. Nach dem Abbruch der Verbindung oder der Änderung der Verbindungsart wird der Stand dieses Zählers komprimiert.

Auch der Verbindungszeitpunkt könnte grob (z.B. der Tag der Verbindung) vom Prozessortakt abgeleitet werden. Dazu wird in der iTAE ein Tageszähler realisiert, der vom Prozessortakt gesteuert wird..Die durch den Prozessortakt erreichte Genauigkeit des Zählers erscheint für den Zweck ausreichend. Im Beschwerdefall müßte der Servicetechniker beim Kunden den gegenwärtigen Stand dieses Zählers auslesen, Falls dieser Zähler gesichert gespeichert ist, müßte der Servicetechniker ggf. beim Kunden einen Verbindungsaufbau starten, um aus dem zu dieser Verbindung gehörigen Datensatz den gegenwärtigen Stand des Zählers zu ermitteln. Von diesem Zählerstand aus, könnte der Tag aller vorhergehenden Verbindungen ausreichend genau ermittelt werden.

Zusätzlicher Aufwand zur Realisierung der Datenerfassung in der iTAE wäre:
- Ein PROM bzw. EEPROM in der iTAE.
- Eine kurze Routine zur Ableitung der Gesprächsdaten, deren Komprimierung und ggf. kryptologische Versiegelung.
- Eine Realisierung eines 1-Byte Zählers,in der iTAE, der alle 24-Stunden den Zählerstand erhöht.
- In einer aufwendigeren Version die Ausstattung der iTAE mit einer Echtzeituhr.

Bei der Anwendung im Telefonnetz der Telekom würden im Zusammenhang mit einem Einzelverblndungsnachweis bei einem Telefonanschluß minimale Informationsmengen für einen detaillierten Nachweis der Anschlußbenutzung ausreichen.

Um genügend Informationen über die Gesprächsart zu erhalten reichen 4-5 Wahlimpulse. Deren Speicherung würde maximal 20 Bit beanspruchen. Weitere 4 Bit könnten zur Speicherung einer nichtlinear gestaffelten Gesprächsdauer verwendet werden. In 8 Bit könnte der Tag des Verbindungsaufbaus in Relation zum gegenwärtigen Zeitpunkt gespeichert werden. Insgesamt wären 4 Byte ausreichend.

Ein Aufzeichnungszeitraum der Daten über zwei Monate wäre eine untere Grenze. Bei 100 Verbindungen pro Tag, entsprechend 3000 Verbindungen pro Monat, ergeben sich so 24.000 Byte Verbindungsdaten für zwei Monate.

Nach Abbruch der Netzverbindung durch das Endgerät, könnte die LÜE verschlüsselt, beeinflußt durch den geheimen Schlüssel der iTAE, Daten, wie z.B. Gebühreninformationen, an die iTAE übertragen.

Minimal wäre eine Rückmeldung an die iTAE, ob die erwünschte Verbindung tatsächlich aufgebaut wurde. Empfängt die iTAE diese Rückmeldung, so weiß sie, ob Verbindungsleistungen beansprucht wurden. Falls sie erkennt, daß keine Verbindung zustande kam, speichert sie die Verbindungsdaten nicht. Empfängt sie keine Rückmeldung, so hat sie auch keine zusätzliche Information und muß die angefallenen Verbindungsdaten speichern. Auch könnte diese Rückmeldung die Wahlinformation beinhalten, um in der iTAE zu überprüfen, ob die LÜE die korrekte Wahlinformation empfing.

## Patentansprüche

1. Verfahren zur Nachprüfung einer Gebührenabrechnung eines Fernmeldenetzbetreibers für von einem Teilnehmeranschluss aus aufgebaute Netzverbindungen und Serviceleistungen, bei dem die auf den Leitungen des Teilnehmeranschlusses anstehenden elektrischen Zustände, Signale bzw. abgelaufenen Vorgänge in einer Teilnehmeranschlusseinheit (iTAE) erfasst und nach automatischer Zuordnung von Zeitdaten automatisch in einem Speicher der Teilnehmeranschlusseinheit (iTAE) gespeichert werden, **dadurch gekennzeichnet, dass** ein Authentikationsprozess vorgesehen ist, bei dem in der Teilnehmeranschlusseinheit (iTAE), abhängig von den Signalen und einem in der Teilnehmeranschlusseinheit (iTAE) gespeicherten geheimen Schlüssel, Authentikationstoken berechnet werden, die zusätzlich zu Endgerätesignalen an eine Leitungsüberwachungseinheit (LÜE) gesendet werden, die ihrerseits alle Informationen kennt, um zu den empfangenen Endgerätesignalen die Authentikationstoken zu berechnen, und die empfangene Authentikationstoken überprüft und entscheidet, ob die empfangenen Endgerätesignale von der Teilnehmeranschlusseinheit (iTAE) stammen, und der Authentikationsprozess und die Erfassungs- und Speichervorgänge zwangsläufig miteinander verbunden sind, indem die Endgerätesignale gegenüber der Leitungsüberwachungseinheit (LÜE) authentifiziert und in der Teilnehmeranschlusseinheit (iTAE) aufgezeichnet werden, wobei die Trennung von Authentikationsprozess von den Erfassungs- und Speichervorgängen sowie eine Veränderung der aufgezeichneten Daten nur mit nachträglich feststellbaren Manipulationen an der Teilnehmeranschlusseinheit (iTAE) durchführbar ist.

2. Verfahren nach Patentanspruch 1, **dadurch gekennzeichnet,**
**dass** von der im Netz der Teilnehmeranschlußeinheit (iTAE) zugeordneten Gegenstelle (LÜE) authentifiziert Daten an die Teilnehmeranschlußeinheit (iTAE) übertragen werden, welche insbesondere Bestätigungen über aufgebaute oder nicht aufgebaute Netzverbindungen und Zusatzinformationen enthalten.

3. Verfahren nach Patentanspruch 1, **dadurch gekennzeichnet,**
**dass** in der Teilnehmeranschlußeinheit (iTAE) mit dem Authentikationsnachweis nur solche Daten verknüpft und aufgezeichnet werden, die von einem daran angeschlossenen Endgerät eingespeist werden,(zum Beispiel Wahlimpulse oder Signale zur Anforderung spezieller Serviceleistungen), sowie Zeitdaten, (zum Beispiel Zeitpunkt des Aufbaus und des Endes einer Verbindung oder deren Dauer), die in der Teilnehmeranschlußeinheit (iTAE) selbst erzeugt oder ermittelt werden, und dass alle Daten, die aus dem Netz in die Teilnehmeranschlußeinheit (iTAE) gelangen, bei der Datenaufzeichnung unterdrückt werden.

4. Verfahren nach einem der Patentansprüche 1 bis 3,
**dadurch gekennzeichnet,**
**dass** in der Teilnehmeranschlußeinheit (iTAE) nur die Verbindungsdaten gespeichert werden, die den auf einem Verbindungsnachweis des Netzbetreibers aufgelisteten Verbindungsleistungen mit der Verbindungszeit zuzuordnen sind.

5. Vorrichtung zur Nachprüfung von Gebührenabrechnungen eines Fernmeldenetzbetreibers für von einem Teilnehmeranschluß, zum Beispiel Telefon, Telefax, aus aufgebaute Netzverbindungen und Serviceleistungen, die an die Durchführung jedes Methodenschrittes gemäß dem Verfahren eines der Patentansprüche 1 bis 4 angepaßte Mittel aufweist und Mittel zur Zeiteingabe, sowie einen Prozessor- und gegen Manipulation gesicherten Speicherbaustein enthält,
**dadurch gekennzeichnet,**
**daß** sie zusammen mit zusätzlichen Mitteln der Authentikation, insbesondere einem geheimen Schlüssel, untrennbar verbunden in die Teilnehmeranschlußeinheit (iTAE) integriert ist.

## Claims

1. Method for verifying the charge accounting of a telecommunication network operator for network calls and services established from a subscriber line, in which the electrical states and/or signals present on the lines of the subscriber line and/or the events occurring thereon are captured in a subscriber terminal unit (iTAE) and, after automatic assignment of time data, are automatically stored in a memory of the subscriber terminal unit (iTAE), **characterized in that** an authentication process is provided in which, depending on the signals and on a secret key stored in the subscriber terminal unit (iTAE), authentication tokens are computed in the subscriber terminal unit (iTAE), said authentication tokens being transmitted in addition to terminal device signals to a line monitoring unit (LÜE), wherein said line monitoring unit (LÜE), in turn, has knowledge of all the information for computing the authentication tokens for the received terminal device signals and checks the received authentication tokens and decides whether the received terminal device signals originate from the subscriber terminal unit (iTAE), the authentication process and the capturing and storing operations being unavoidably interconnected **in that** the terminal device signals are authenticated vis-a-vis the line monitoring unit (LÜE) and are recorded in the subscriber terminal unit (iTAE), the separation of the authentication process from the capturing and storing operations as well as the changing of the recorded data being possible only with subsequently detectable manipulations on the subscriber terminal unit (iTAE).

2. Method according to claim 1, **characterized in that**
data which have been authenticated by the other side (LÜE) associated in the network with the subscriber terminal unit (iTAE) are transmitted to the subscriber terminal unit (iTAE), said data containing, in particular, confirmations in respect of established or non-established network calls and additional information.

3. Method according to claim 1, **characterized in that**
in the subscriber terminal unit (iTAE) only those data are linked with the authentication verification and are recorded which are supplied from a thereto connected terminal device (such as dial pulses or signals for requesting special services) as well as time data (such as times of the establishing and end of a call or the duration thereof) generated or calculated in the subscriber terminal unit (iTAE) itself, and **in that** all the data which enter the subscriber terminal unit (iTAE) from the network are suppressed when the data are recorded.

4. Method according to any one of claims 1 to 3, **characterized in that**
in the subscriber terminal unit (iTAE) only those call data are stored which can be associated, with the call time, with the call services listed on a call record of the network operator.

5. Device for verifying the charge accounting of a telecommunication network operator for network calls and services established from a subscriber line, such as telephone, telefax, said device comprising means adapted to the execution of each method step according to the method in any one of claims 1 to 4 and containing means for time input as well as a processor module and manipulation-proof memory module, **characterized in that**
said device, inseparably connected to additional means of authentication, in particular a secret key, is integrated into the subscriber terminal unit (iTAE).

## Revendications

1. Procédé pour vérifier la facturation d'un opérateur de réseau de télécommunications pour des communications et services établis à partir d'un raccordement d'abonné où les états électriques des circuits du raccordement d'abonné, les signaux ou les opérations écoulées sont saisis par une unité de raccordement d'abonné (iTAE) avant d'être automatiquement enregistrés, après allocation automatique de données temporelles, dans une mémoire de l'unité de raccordement d'abonné (iTAE), **caractérisé en ce qu'**un processus d'authentification est prévu dans le cadre duquel sont calculés, à l'unité de raccordement d'abonné et en fonction des signaux et d'une clé secrète enregistrée dans l'unité de raccordement d'abonné (iTAE), des jetons d'authentification qui sont envoyés, outre les signaux d'équipement terminal, à une unité de contrôle de circuit (LÜE) qui, elle, dispose de toutes les informations pour calculer les jetons d'authentification afférents aux signaux, vérifie les jetons d'authentification reçus et décide si les signaux d'équipement terminal proviennent de l'unité de raccordement d'abonné (iTAE) et l'opération d'authentification et les opérations de saisie et d'enregistrement sont forcément liées l'une aux autres par le fait que les signaux d'équipement terminal sont authentifiés vis-à-vis de l'unité de contrôle de circuit (LÜE) et enregistrés dans l'unité de raccordement d'abonné (iTAE), la séparation entre le processus d'authentification et les opérations de saisie et d'enregistrement ainsi qu'un changement des données enregistrées n'étant possibles que par manipulation, détectable après coup, de l'unité de raccordement d'abonné (iTAE).

2. Procédé selon la revendication 1, **caractérisé en ce que**
l'unité correspondante (LÜE) assignée, dans le réseau, à l'unité de raccordement d'abonné (iTAE) transmet des données authentifiées à l'unité de raccordement d'abonné (iTAE) qui contiennent notamment des confirmations relatives aux communications de réseau établies ou non établies ainsi que des informations supplémentaires.

3. Procédé selon la revendication 1, **caractérisé en ce que**
l'unité de raccordement d'abonné (iTAE) n' interconnecte avec le justificatif d'authentification et n'enregistre que les données qui sont alimentées par un équipement terminal y raccordé (par exemple des impulsions de sélection ou des signaux de demande de services spéciaux) ainsi que des données temporelles (par exemple instant d'établissement et de terminaison d'une communication ou durée de cette communication) qui sont générées ou déterminées dans l'unité de raccordement d'abonné (iTAE) elle-même, et toutes les données parvenant depuis le réseau jusqu'à l'unité de raccordement d'abonné (iTAE) sont supprimées lors de l'enregistrement de données.

4. Procédé selon l'une des revendications 1 à 3, **caractérisé en ce que**
l'unité de raccordement d'abonné (iTAE) n'enregistre que les données de communication correspondant aux prestations de communication énumérées avec la durée de communication y afférente dans un relevé de communication de l'opérateur de réseau.

5. Dispositif pour vérifier la facturation d'un opérateur de réseau de télécommunications pour des communications et des services établis à partir d'un raccordement d'abonné, tel qu'un poste téléphonique ou téléfax, ledit dispositif présentant des moyens adaptés à la réalisation de chaque pas méthodique d'après le procédé selon l'une des revendications 1 à 4 ainsi que des moyens d'introduction de données temporelles, un processeur et une mémoire protégée contre des manipulations, **caractérisé en ce qu'**il est intégré, avec des moyens supplémentaires d'authentification, notamment une clé secrète, dans l'unité de raccordement d'abonné (iTAE).
